(19) Europäisches Patentamt
European Patent Office
Office européen des brevets

(11) **EP 4 524 890 A1**

(12) **EUROPEAN PATENT APPLICATION**

(43) Date of publication:
**19.03.2025 Bulletin 2025/12**

(21) Application number: **23202936.3**

(22) Date of filing: **11.10.2023**

(51) International Patent Classification (IPC):
***G06T 11/00*** *(2006.01)*

(52) Cooperative Patent Classification (CPC):
**G06T 11/008;** G06T 2211/404

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.09.2023 US 202363538891 P**

(71) Applicant: **Koninklijke Philips N.V.**
**5656 AG Eindhoven (NL)**

(72) Inventors:
• **GRASS, Michael**
**Eindhoven (NL)**

• **NICKISCH, Hannes**
**Eindhoven (NL)**
• **BAE, Unmin**
**5656AG Eindhoven (NL)**
• **LANGZAM, Eran**
**Eindhoven (NL)**
• **SCHMITT, Holger**
**Eindhoven (NL)**
• **KLINDER, Tobias**
**Eindhoven (NL)**

(74) Representative: **Philips Intellectual Property & Standards**
**High Tech Campus 52**
**5656 AG Eindhoven (NL)**

(54) **PROVIDING A PROJECTION IMAGE OF A VASCULAR REGION**

(57)      A computer-implemented method of providing a projection image representing a vascular region, is provided. The method includes: analyzing spectral CT data 110 to provide i) volumetric contrast agent image data representing a distribution of a contrast agent, and ii) volumetric background image data representing background media; reconstructing (S130) the volumetric contrast agent image data, and the volumetric background image data to provide a volumetric contrast agent image (140), and a volumetric background image (150), respectively; projecting (S140) a proper subset ($120_1$) of the vessels in the volumetric contrast agent image (140), and the background media (130) in the volumetric background image (150), from a same perspective (P) with respect to the vascular region, to provide a projected contrast agent image (160) representing the proper subset ($120_1$) of the vessels, and a projected background image (170) representing the background media (130), respectively; and combining (S150) the projected contrast agent image (160) and the projected background image (170) to provide a combined projection image (180) representing the vascular region.

FIG. 3

**Description**

TECHNICAL FIELD

The present disclosure relates to providing a projection image representing a vascular region. A computer-implemented method, a computer program product, and a system, are disclosed.

BACKGROUND

Physicians from different specialisms typically diagnose vascular regions using images that are acquired using an imaging protocol that is specific to their specialism. For instance, a radiologist may diagnose a vascular region for the presence of coronary artery disease, i.e. "CAD", using coronary computed tomography angiography "CCTA" images, i.e. using three-dimensional images that are acquired using a CT imaging system. By contrast, an interventional cardiologist may diagnose the same vascular region for the presence of CAD using projected images, i.e. using two-dimensional images that are acquired using a projection X-ray imaging system. Differences in the appearance of the images that are acquired using the different imaging protocols create challenges for a physician trying to perform a diagnosis using images that are acquired by a physician from a different specialism. For instance, it can be challenging for an interventional cardiologist to diagnose a vascular region using the three-dimensional images that have been acquired by a radiologist.

Spectral CT imaging systems generate X-ray attenuation data in multiple different energy intervals. The processing of such data permits a distinction to be made between materials that have similar X-ray attenuation values when measured within a single energy interval, and which would be indistinguishable in X-ray attenuation data acquired from conventional CT imaging systems. The X-ray attenuation data generated by spectral imaging systems may be used to distinguish between media such as contrast agent in a blood vessel, and tissue. The use of spectral CT imaging systems to acquire images as opposed to conventional CT imaging systems therefore provides an opportunity for radiologists to perform a more accurate diagnosis of a vascular region.

However, images that are acquired using spectral CT imaging systems appear different again to images that are acquired using conventional CT imaging systems. This exacerbates the challenges faced by an interventional cardiologist in diagnosing a vascular region using three-dimensional images that have been acquired by a radiologist. Consequently, there is a need to assist interventional cardiologists in diagnosing vascular regions using the three-dimensional images that have been acquired using spectral CT imaging systems.

SUMMARY

According to one aspect of the present disclosure, a computer-implemented method of providing a projection image representing a vascular region, is provided. The method comprises:

> receiving spectral CT data representing a distribution of a contrast agent in the vascular region, the vascular region comprising a plurality of vessels and background media;
> analyzing the spectral CT data to provide i) volumetric contrast agent image data representing the distribution of the contrast agent, and ii) volumetric background image data representing the background media;
> reconstructing the volumetric contrast agent image data, and the volumetric background image data to provide a volumetric contrast agent image, and a volumetric background image, respectively;
> projecting a proper subset of the vessels in the volumetric contrast agent image, and the background media in the volumetric background image, from a same perspective with respect to the vascular region, to provide a projected contrast agent image representing the proper subset of the vessels, and a projected background image representing the background media, respectively;
> combining the projected contrast agent image and the projected background image to provide a combined projection image representing the vascular region; and
> outputting the combined projection image.

In the above method, spectral CT data is analyzed in order to provide volumetric contrast agent image data representing the distribution of the contrast agent, and volumetric background image data representing the background media. Since each of these types of data is provided by analyzing spectral CT data, a reliable distinction can be made between the contrast agent and the background media. This, in-turn, this facilitates a more accurate diagnosis of the vascular region.

In the above method, the volumetric contrast agent image data, and the volumetric background image data, are reconstructed to provide a volumetric contrast agent image, and a volumetric background image, respectively. A proper subset of the vessels in the volumetric contrast agent image is then projected to provide a projected contrast agent image.

The background media in the volumetric background image is also projected to provide a projected background image. The projected contrast agent image and the projected background image are then combined to provide a combined projection image representing the vascular region, and which is then outputted. The combined projection image is similar in appearance to an angiographic projection image, i.e. the type of image that is typically acquired by an interventional cardiologist. It therefore assists an interventional cardiologist in performing a diagnosis of a vascular regions using images that have been acquired using a spectral CT imaging system.

The combined projection image is similar in appearance to an angiographic projection image because firstly it includes the vessel(s) as well as background media. This contrasts with e.g. a simulated projected image that is generated by simply projecting a (spectral) cardiac CT image (e.g. via e.g. ray tracing), and which may represent the vessels alone. Secondly, the combined projection image includes a proper subset of the vessels in the vascular region, or in other words, not all of the vessels in the vascular region. An angiographic projection image also does not typically represent all of the vessels in the vascular region. For instance, during an investigation for CAD, typically only the coronary arteries are injected with contrast agent, and so only the coronary arteries, together with a few downstream vessels, appear in the angiographic projection image. By contrast, in a (spectral) cardiac CT image, large parts of the vascular structures are typically filled with contrast agent. For instance, the atria, chamber, aorta and/or superior vena cava may be filled with contrast agent. Thus, a simulated angiographic projection image that is generated by simply projecting a (spectral) cardiac CT image typically results in the coronary arteries being obscured by these large vascular structures. As proposed herein, by projecting a proper subset of the vessels in the volumetric contrast agent image, not all of the vessels that are in the volumetric contrast agent image appear in the combined projection image. This reduces the opportunity for vessels to obstruct one another, and consequently provides a clearer view of the remaining vessels in the proper subset, such as the coronary arteries. Thus, in summary, the combined projection image that is provided by the above method has both an improved distinction between different materials, and an appearance that is similar to an angiographic projection image. In so doing, the method provides assistance to interventional cardiologists in diagnosing vascular regions using images that have been acquired using spectral CT imaging systems.

Further aspects, features, and advantages of the present disclosure will become apparent from the following description of examples, which is made with reference to the accompanying drawings.

BRIEF DESCRIPTION OF THE DRAWINGS

Fig. 1 is a flowchart illustrating an example of a method of providing a projection image representing a vascular region, in accordance with some aspects of the present disclosure.
Fig. 2 is a schematic diagram illustrating an example of a system for providing a projection image representing a vascular region, in accordance with some aspects of the present disclosure.
Fig. 3 is a schematic diagram illustrating an example of various elements of a method of providing a projection image representing a vascular region, in accordance with some aspects of the present disclosure.

DETAILED DESCRIPTION

Examples of the present disclosure are provided with reference to the following description and Figures. In this description, for the purposes of explanation, numerous specific details of certain examples are set forth. Reference in the specification to "an example", "an implementation" or similar language means that a feature, structure, or characteristic described in connection with the example is included in at least that one example. It is also to be appreciated that features described in relation to one example may also be used in another example, and that all features are not necessarily duplicated in each example for the sake of brevity. For instance, features described in relation to a computer implemented method, may be implemented in a computer program product, and in a system, in a corresponding manner.

In the following description, reference is made to the provision of a projection image representing a vascular region. In some examples, the vascular region is the heart. It is, however, to be appreciated that in general the vascular region may in general be any vascular region in the anatomy. For instance, the vascular region may alternatively be (a portion of) the heart, brain, the lung, the leg, and so forth.

It is noted that the computer-implemented methods disclosed herein may be provided as a non-transitory computer-readable storage medium including computer-readable instructions stored thereon, which, when executed by at least one processor, cause the at least one processor to perform the method. In other words, the computer-implemented methods may be implemented in a computer program product. The computer program product can be provided by dedicated hardware, or hardware capable of running the software in association with appropriate software. When provided by a processor, the functions of the method features can be provided by a single dedicated processor, or by a single shared processor, or by a plurality of individual processors, some of which can be shared. The functions of one or more of the method features may for instance be provided by processors that are shared within a networked processing architecture such as a client/server architecture, a peer-to-peer architecture, the Internet, or the Cloud.

The explicit use of the terms "processor" or "controller" should not be interpreted as exclusively referring to hardware capable of running software, and can implicitly include, but is not limited to, digital signal processor "DSP" hardware, read only memory "ROM" for storing software, random access memory "RAM", a non-volatile storage device, and the like. Furthermore, examples of the present disclosure can take the form of a computer program product accessible from a computer-usable storage medium, or a computer-readable storage medium, the computer program product providing program code for use by or in connection with a computer or any instruction execution system. For the purposes of this description, a computer-usable storage medium or a computer readable storage medium can be any apparatus that can comprise, store, communicate, propagate, or transport a program for use by or in connection with an instruction execution system, apparatus, or device. The medium can be an electronic, magnetic, optical, electromagnetic, infrared, or a semiconductor system or device or propagation medium. Examples of computer-readable media include semiconductor or solid-state memories, magnetic tape, removable computer disks, random access memory "RAM", read-only memory "ROM", rigid magnetic disks and optical disks. Current examples of optical disks include compact diskread only memory "CD-ROM", compact disk-read/write "CD-R/W", Blu-Ray™ and DVD. It is also noted that some operations that are described as being performed in the computer-implemented methods disclosed herein may be implemented using artificial intelligence techniques. Suitable techniques may include machine learning techniques, as well as deep learning techniques such as neural networks. For instance, one or more neural networks, may be trained in a supervised, or in some cases unsupervised, manner, to implement the operations performed in the computer-implemented methods disclosed herein.

As mentioned above, there is a need to assist interventional cardiologists in diagnosing vascular regions using the three-dimensional images that have been acquired using spectral CT imaging systems.

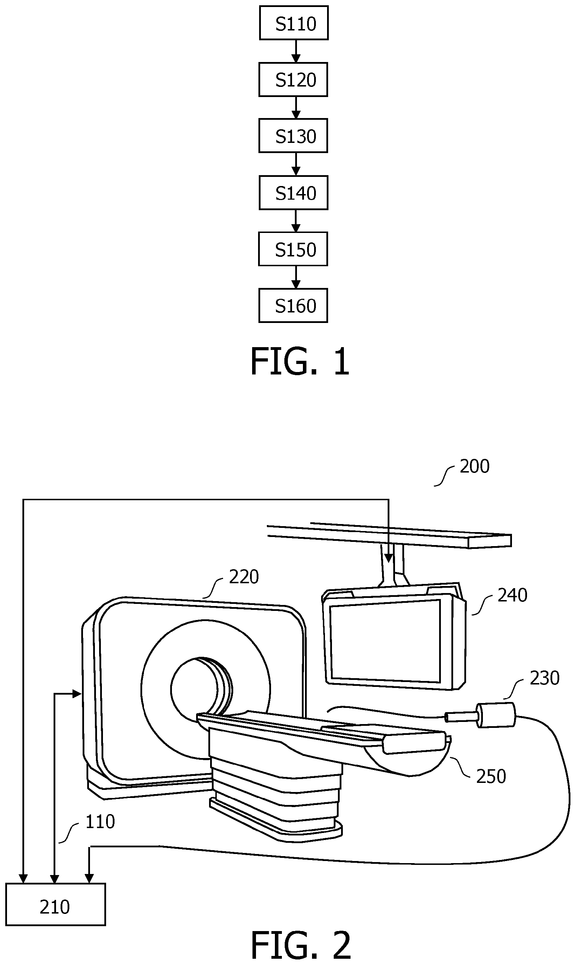

Fig. 1 is a flowchart illustrating an example of a method of providing a projection image representing a vascular region, in accordance with some aspects of the present disclosure. Fig. 2 is a schematic diagram illustrating an example of a system for providing a projection image representing a vascular region, in accordance with some aspects of the present disclosure. It is noted that operations described as being performed in the method illustrated in Fig. 1, may also be performed by the one or more processors 210 of the system 200 illustrated in Fig. 2. Likewise, operations described in relation to the one or more processors 210 of the system 200 illustrated in Fig. 2 may also be performed in the method illustrated in Fig. 1. With reference to Fig. 1, and Fig. 2, the computer-implemented method of providing a projection image representing a vascular region, comprises:

receiving S110 spectral CT data 110 representing a distribution of a contrast agent in the vascular region, the vascular region comprising a plurality of vessels $120_{1..i}$ and background media 130;
analyzing S120 the spectral CT data 110 to provide i) volumetric contrast agent image data representing the distribution of the contrast agent, and ii) volumetric background image data representing the background media;
reconstructing S130 the volumetric contrast agent image data, and the volumetric background image data to provide a volumetric contrast agent image 140, and a volumetric background image 150, respectively;
projecting S140 a proper subset $120_1$ of the vessels in the volumetric contrast agent image 140, and the background media 130 in the volumetric background image 150, from a same perspective, P, with respect to the vascular region, to provide a projected contrast agent image 160 representing the proper subset $120_1$ of the vessels, and a projected background image 170 representing the background media 130, respectively;
combining S150 the projected contrast agent image 160 and the projected background image 170 to provide a combined projection image 180 representing the vascular region; and
outputting S160 the combined projection image 180.

In the above method, spectral CT data is analyzed in order to provide volumetric contrast agent image data representing the distribution of the contrast agent, and volumetric background image data representing the background media. Since each of these types of data is provided by analyzing spectral CT data, a reliable distinction can be made between the contrast agent and the background media. This, in-turn, this facilitates a more accurate diagnosis of the vascular region.

In the above method, the volumetric contrast agent image data, and the volumetric background image data, are reconstructed to provide a volumetric contrast agent image, and a volumetric background image, respectively. A proper subset of the vessels in the volumetric contrast agent image is then projected to provide a projected contrast agent image. The background media in the volumetric background image is also projected to provide a projected background image. The projected contrast agent image and the projected background image are then combined to provide a combined projection image representing the vascular region, and which is then outputted. The combined projection image is similar in appearance to an angiographic projection image, i.e. the type of image that is typically acquired by an interventional cardiologist. It therefore assists an interventional cardiologist in performing a diagnosis of a vascular regions using images that have been acquired using a spectral CT imaging system.

The combined projection image is similar in appearance to an angiographic projection image because firstly it includes the vessel(s) as well as background media. This contrasts with e.g. a simulated projected image that is generated by simply projecting a (spectral) cardiac CT image (e.g. via e.g. ray tracing), and which may represent the vessels alone. Secondly, the combined projection image includes a proper subset of the vessels in the vascular region, or in other words, not all of the vessels in the vascular region. An angiographic projection image also does not typically represent all of the vessels in the vascular region. For instance, during an investigation for CAD, typically only the coronary arteries are injected with contrast agent, and so only the coronary arteries, together with a few downstream vessels, appear in the angiographic projection image. By contrast, in a (spectral) cardiac CT image, large parts of the vascular structures are typically filled with contrast agent. For instance, the atria, chamber, aorta and/or superior vena cava may be filled with contrast agent. Thus, a simulated angiographic projection image that is generated by simply projecting a (spectral) cardiac CT image typically results in the coronary arteries being obscured by these large vascular structures. As proposed herein, by projecting a proper subset of the vessels in the volumetric contrast agent image, not all of the vessels that are in the volumetric contrast agent image appear in the combined projection image. This reduces the opportunity for vessels to obstruct one another, and consequently provides a clearer view of the remaining vessels in the proper subset, such as the coronary arteries. Thus, in summary, the combined projection image that is provided by the above method has both an improved distinction between different materials, and an appearance that is similar to an angiographic projection image. In so doing, the method provides assistance to interventional cardiologists in diagnosing vascular regions using images that have been acquired using spectral CT imaging systems.

The operations that are performed in the method illustrated in Fig. 1, are described in more detail below.

In the operation S 110, spectral CT data 110 is received.

In general, the spectral CT data 110 that is received in the operation S 110 may be raw data, i.e. data that has not been reconstructed into volumetric image, or it may be image data, i.e. data that represents a reconstructed volumetric image.

In general, the spectral CT data 110 that is received in the operation S 110 may be received from various sources. For instance, the spectral CT data 110 may be received from a spectral CT imaging system, such as the spectral CT imaging system 220 illustrated in Fig. 2. Alternatively, the spectral CT data may be received from another source, such as from a spectral X-ray projection imaging system, as described in more detail below, or it may be received from a computer readable storage medium, or from the Internet, or from the Cloud, and so forth.

In general, the spectral CT data 110 may be received via any form of data communication, including via wired, or optical, or wireless communication. By way of some examples, when wired or optical communication is used, the communication may take place via signals transmitted on an electrical or optical cable, and when wireless communication is used, the communication may take place via RF or optical signals.

The spectral CT data 110 that is received in the operation S110 represents X-ray attenuation in a plurality of different energy intervals. There may be two or more energy intervals. The ability to generate X-ray attenuation data in multiple different energy intervals distinguishes a spectral CT imaging system from a conventional CT imaging system, and which generates X-ray attenuation data within only a single energy interval. By processing the data from the multiple different energy intervals, e.g. using various material decomposition algorithms, a distinction can be made between media that have similar X-ray attenuation values when measured within a single energy interval, and which would be indistinguishable from attenuation data generated by a conventional CT imaging system.

As mentioned above, the spectral CT data 110 that is received in the operation S110 may be generated by a spectral CT imaging system. A spectral CT imaging system generates spectral CT data whilst rotating, or stepping, an X-ray source-detector arrangement around an imaging region. Examples of spectral CT imaging systems include cone beam spectral CT imaging systems, photon counting spectral CT imaging systems, dark-field spectral CT imaging systems, and phase contrast spectral CT imaging systems. By way of an example, the spectral CT data 110 may be generated by the Spectral CT 7500 that is marketed by Philips Healthcare, Best, The Netherlands.

Various configurations of spectral CT imaging systems may be used to generate the spectral CT data that is received in the operation S110. In general, a spectral CT imaging system includes an X-ray source, and an X-ray detector. The X-ray source may be provided by multiple monochromatic sources, or by one or more polychromatic sources, and the X-ray detector may include: a common detector for detecting X-ray radiation across multiple different X-ray energy intervals, or multiple detectors wherein each detector detects X-ray radiation within a different X-ray energy interval, or a multi-layer detector in which X-ray radiation within each of multiple different X-ray energy intervals is detected by corresponding layers, or a photon counting detector that bins detected X-ray photons into one of multiple energy intervals based on their individual energies. In a photon counting detector, the relevant energy interval may be determined for each received X-ray photon by detecting the pulse height induced by electron-hole pairs that are generated in response to the X-ray photon's absorption in a directconversion material.

Various configurations of the aforementioned X-ray sources and X-ray detectors may be used in a spectral CT imaging system to generate spectral attenuation data representing X-ray attenuation in a plurality of different energy intervals. In general, a discrimination between different X-ray energy intervals may be provided at the X-ray source by temporally switching the X-ray anode potential of a single X-ray source, i.e. by "rapid kVp switching", or by temporally switching, or filtering, the emission of X-rays from multiple X-ray sources. In such configurations, a common X-ray detector may be used to detect X-rays across multiple different energy intervals, attenuation data for each of the energy intervals being generated in a time-sequential manner. Alternatively, a discrimination between different X-ray energy intervals may be provided at the X-ray detector 340 by using a multi-layer detector, or a photon counting detector. Such detectors can detect X-rays from multiple X-ray energy intervals nearsimultaneously, and thus there is no need to perform temporal switching at the X-ray source. Thus, a multi-layer X-ray detector, or a photon counting X-ray detector, may be used in combination with a polychromatic X-ray source to generate spectral attenuation data in a plurality of different energy intervals.

Other configurations of the aforementioned X-ray sources and X-ray detectors may alternatively be used in a spectral CT imaging system to provide the desired X-ray attenuation data in a plurality of different energy intervals. For example, in a yet further configuration, the need to sequentially switch different X-ray sources emitting X-rays in different energy intervals may be obviated by mounting X-ray source-detector pairs to a gantry at rotationally-offset positions around the axis of rotation. In this configuration, each source-detector pair operates independently, and a separation between the X-ray attenuation data for the different energy intervals is facilitated by virtue of the rotational offsets of the source-detector pairs. Improved separation between the spectral attenuation data for the different energy intervals may be achieved with this configuration by applying an energy-selective filter to the X-ray detector(s) in order to reduce the effects of X-ray scatter.

In another configuration, the spectral CT data 110 may be provided by intercepting the X-ray beam in a conventional X-ray imaging system with one or more spectral filters. For example, a single filter may be mechanically moved into, and out of, the X-ray beam generated by a polychromatic X-ray source in order to temporally control the spectrum of X-rays detected by an X-ray detector. The filter may for instance transmit only a portion of the spectrum of X-rays emitted by the polychromatic X-ray source, and thereby provide spectral attenuation data for a first energy interval when the filter intercepts the beam. When the filter is removed from the beam, spectral attenuation data is provided for a second energy interval, e.g. for the complete spectrum emitted by the polychromatic X-ray source. In so doing, X-ray attenuation data for the energy intervals is generated in a time-sequential manner. Multiple filters, each with a different X-ray transmission spectrum, may be sequentially switched into, and out of, the X-ray beam in order to increase the number of energy intervals.

Instead of being generated by a spectral CT imaging system, the spectral CT data 110 that is received in the operation S110 may alternatively be generated by a spectral X-ray projection imaging system. Spectral X-ray projection imaging systems typically include a support arm such as a so-called "C-arm", also known as a gantry, that supports an X-ray source and an X-ray detector. Spectral X-ray projection imaging systems may alternatively include a support arm with a different shape to this example, such as an O-arm, for example. Spectral X-ray projection imaging systems typically generate projection data with the support arm held in a static position with respect to an imaging region during the acquisition of projection data. The projection data may be used to generate a 2D image. However, spectral X-ray projection imaging systems may also generate spectral CT data, i.e. data that can be reconstructed into a volumetric image. A spectral X-ray projection imaging system may generate spectral CT data for a region of interest by rotating its support arm around an axis of rotation and acquiring spectral X-ray projection data for the region of interest from multiple rotational angles around the axis of rotation. The set of spectral X-ray projection data from the multiple rotational angles represents spectral CT data because this may be reconstructed to provide a volumetric image. Various image reconstruction techniques may be used to reconstruct the set of spectral X-ray projection data from the multiple rotational angles into a volumetric image. These techniques process the set of spectral X-ray projection data in the same manner as spectral CT data that is generated by a spectral CT imaging system. Thus, the spectral CT data 110 that is received in the operation S110 may alternatively be generated by a spectral X-ray projection imaging system.

The spectral CT data 110 that is received in the operation S110 represents a distribution of a contrast agent in a vascular region. The vascular region comprises a plurality of vessels $120_{1..i}$ and background media 130. The vessels that are included in the vascular region are blood vessels. The blood vessels may be arteries, veins, capillaries, and so forth. The background media that are included in the vascular region are media other than blood vessels. The background media may be media such as tissue, plaque, bone, stent(s), interventional device(s), and so forth. As mentioned above, in general, the vascular region may be any vascular region in the anatomy. The vascular region may be the heart, for example. The contrast agent is injected into the vasculature prior to the acquisition of the spectral CT data and is transported by the blood in the vasculature to the vascular region. The contrast agent may be injected manually, or by using an injector such as the injector 230 illustrated in Fig. 2, for example. The contrast agent may include various substances such as Iodine, or a Lanthanide such as Gadolinium, or another substance that provides visibility of the blood into which the contrast agent is injected.

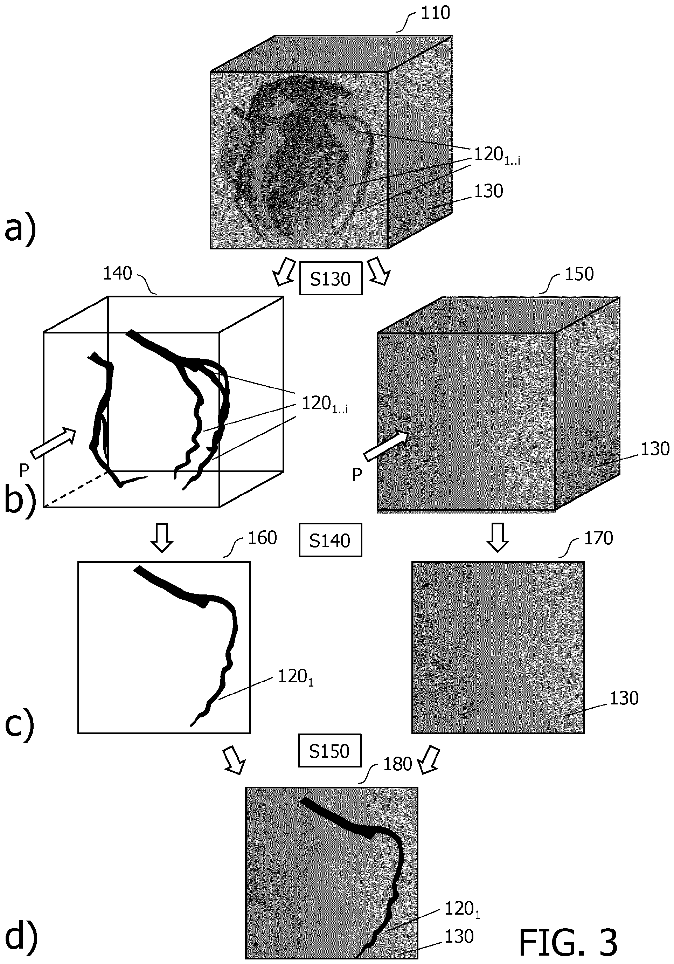

An example of the spectral CT data 110 that is received in the operation S110 is illustrated in Fig. 3, which is a schematic diagram illustrating an example of various elements of a method of providing a projection image representing a vascular region, in accordance with some aspects of the present disclosure. With reference to Fig. 3a), the spectral CT data 110 is illustrated in the form of a volumetric image representing the heart. In the image illustrated in the upper portion in Fig. 3, darker regions of the spectral CT data 110 correspond to blood, and less-dark regions correspond to background media.

Returning to the method illustrated in Fig. 1, in the operation S120, the spectral CT data 110 is analyzed to provide i) volumetric contrast agent image data representing the distribution of the contrast agent, and ii) volumetric background image data representing the background media.

In one example, the operation of analyzing S120 the spectral CT data 110 includes applying one or more material decomposition algorithms to the spectral CT data. One example of a material decomposition algorithm that may be used is disclosed in a document by Brendel, B. et al., "Empirical, projection-based basis-component decomposition method", Medical Imaging 2009, Physics of Medical Imaging, edited by Ehsan Samei and Jiang Hsieh, Proc. of SPIE Vol. 7258, 72583Y. Another example of a material decomposition algorithm that may be used is disclosed in a document by Roessl, E. and Proksa, R., "K-edge imaging in X-ray computed tomography using multi-bin photon counting detectors", Phys Med Biol. 2007 Aug 7, 52(15):4679-96. Another example of a material decomposition algorithm that may be used is disclosed in the published PCT patent application WO/2007/034359 A2. Another example of a material decomposition algorithm that may be used is disclosed in a document by Silva, A. C., et al., "Dual-energy (spectral) CT: applications in abdominal imaging", RadioGraphics 2011; 31(4):1031-1046.

With continued reference to the method illustrated in Fig. 1, in the operation S130, the volumetric contrast agent image data, and the volumetric background image data, are reconstructed to provide a volumetric contrast agent image 140, and a volumetric background image 150, respectively. This operation is illustrated in Fig. 3 via the label S130, and the resulting volumetric contrast agent image 140, and the volumetric background image 150, are illustrated in Fig. 3b). The operation S130 may be performed by reconstructing each set of data using known image reconstruction techniques.

With continued reference to the method illustrated in Fig. 1, in the operation S140, a proper subset $120_1$ of the vessels in the volumetric contrast agent image 140, and the background media 130 in the volumetric background image 150, are projected from a same perspective, P, with respect to the vascular region, to provide a projected contrast agent image 160 representing the proper subset $120_1$ of the vessels, and a projected background image 170 representing the background media 130, respectively.

The proper subset $120_1$ of the vessels in the volumetric contrast agent image 140 is a set of the vessels in the volumetric contrast agent image 140 that includes not all of the vessels in the volumetric contrast agent image 140. In other words, the proper subset $120_1$ is a set of vessels selected from the vessels in the volumetric contrast agent image 140 in which at least one of the vessels in the volumetric contrast agent image 140 is omitted. In the example of the vascular region being the heart, the proper subset $120_1$ of the vessels may include at least one coronary artery, for example. In another example, the proper subset $120_1$ of the vessels includes only a single vessel from the volumetric contrast agent image 140.

The method illustrated in Fig. 1, may also include an operation of identifying the proper subset $120_1$ of the vessels in the volumetric contrast agent image 140.

In the example of the vascular region being the heart, the proper subset $120_1$ may include vessels such as left main "LM", left anterior descending "LAD", left circumflex artery "LCX", the right coronary artery "RCA", and so forth. For non-coronary vascular regions, the subset of the vessels may include other vessels.

Various techniques may be used to identify the proper subset $120_1$ of the vessels in the volumetric contrast agent image 140. In some examples, the proper subset $120_1$ is identified automatically. For instance, the identification of the proper subset $120_1$ of the vessels in the volumetric contrast agent image 140 may include automatically segmenting and labelling the proper subset of the vessels in the volumetric contrast agent image. Various segmentation techniques may be used for this purpose, such as model-based segmentation, semantic segmentation, and so forth. An example of a general segmentation technique that may be used for this purpose is disclosed in a document by Ronneberger, O., et al., "U-Net: Convolutional Networks for Biomedical Image Segmentation", In: Navab, N., Hornegger, J., Wells, W., Frangi, A. (Eds.) Medical Image Computing and Computer-Assisted Intervention - MICCAI 2015. MICCAI 2015. Lecture Notes in Computer Science, Vol. 9351. An example of a segmentation technique for coronary artery segmentation is disclosed in the document by Wolterink, J., et. al., "Coronary Artery Centerline Extraction in Cardiac CT Angiography Using a CNN-Based Orientation Classifier", In: Medical Image Analysis, Volume 51, January 2019, Pages 46-60.

In another example, the operation of identifying a proper subset $120_1$ of the vessels in the volumetric contrast agent image 140 includes receiving user input identifying the proper subset of the vessels. For example, the volumetric contrast agent image 140 may be displayed, and the user may provide user input identifying the proper subset $120_1$ of the vessels in the displayed volumetric contrast agent image 140.

In another example, the identification of the proper subset $120_1$ of the vessels in the volumetric contrast agent image 140 may be performed using a database. The database stores, for each of a plurality of injection catheter positions, a subset of one or more vessel(s) in the vascular region that are supplied by contrast agent as a consequence of an injection of the contrast agent at the corresponding injection catheter position. In this example, the proper subset $120_1$

corresponding to a user selection of a displayed list of potential injection catheter positions, is extracted from the database in response to the user selection, and the proper subset is identified in the volumetric contrast agent image 140 via the segmentation techniques mentioned above.

An example of the result of the projection of a proper subset $120_1$ of the vessels in the volumetric contrast agent image 140 that is performed in the operation S 140 is illustrated in Fig. 3c). In this example, the proper subset $120_1$ of the vessels in the volumetric contrast agent image 140 that is projected is the left anterior descending "LAD" coronary artery, and this results in the projected contrast agent image 160 illustrated on the left-hand side of Fig. 3c). The projected background image 170 is illustrated on the right-hand side of Fig. 3c). The projected background image 170 represents media such as tissue, and so forth. The images 160 and 170 are obtained by projecting the corresponding volumetric images 140 and 150 from the same perspective, as illustrated by the arrow, P, in the images 140 and 150 in Fig. 3b). In general, the perspective may be any perspective. In one example, the perspective, P, is defined by a user. The perspective, P, may correspond to a typical perspective for viewing the vessel(s), e.g. for performing a diagnosis of the vessel(s). The projection is performed in a mathematical sense, and may therefore be described as a "virtual" projection. The projection may involve projecting the volumetric images 140 and 150 onto a virtual X-ray detector using a geometrical arrangement of a virtual X-ray source, and a virtual X-ray detector, and the vascular region, that is similar to the geometry of the X-ray source, the X-ray detector, and the vascular region used to acquire the spectral CT data 110.

With continued reference to the method illustrated in Fig. 1, in the operation S150, the projected contrast agent image 160 and the projected background image 170, are combined to provide a combined projection image 180 representing the vascular region.

An example of the result of the operation S150 is illustrated in Fig. 3d). In this example the operation of combining S150 the projected contrast agent image 160 and the projected background image 170 comprises overlaying the projected contrast agent image and the projected background image to provide the combined projection image 180 representing the vascular region.

With continued reference to the method illustrated in Fig. 1, in the operation S160, the combined projection image 180 is outputted. The combined projection image 180 may be outputted in various ways, including in a visual format. For instance, the combined projection image 180 may be outputted to a display, such as the display 240 illustrated in Fig. 2. Alternatively, the combined projection image 180 may be outputted to another destination, such as to a printer, or to another processor, or to a computer readable storage medium, and so forth.

As may be appreciated from the example combined projection image 180 illustrated in Fig. 3d), by projecting a proper subset of the vessels in the volumetric contrast agent image, not all of the vessels that are in the volumetric contrast agent image appear in the combined projection image. This reduces the opportunity for vessels to obstruct one another, and consequently provides a clearer view of the remaining vessels in the proper subset, e.g. the coronary arteries. Thus, in summary, the combined projection image 180 has both an improved distinction between different materials, and an appearance that is similar to an angiographic projection image. In so doing, the method provides assistance to interventional cardiologists in diagnosing vascular regions using images that have been acquired using spectral CT imaging systems.

The computer-implemented method described above may include one or more additional operations.

In one example, the background media 130 comprises a plurality of different types of materials. In this example, the operation of analyzing S120 the spectral CT data 110 comprises analyzing the spectral CT data to provide volumetric background image data for each type of material present in the background media. Moreover, the operation of reconstructing the volumetric background image data comprises reconstructing the volumetric background image data for each type of material to provide a volumetric background image wherein the different types of materials are distinguished from each other. Thus, with reference to Fig. 3, in this example rather than generating a single volumetric background image 150 in Fig. 3b), multiple volumetric background images are generated. Volumetric background images may be generated for materials such as contrast agent, tissue, hard or soft plaque, bone, stent material, interventional devices, and so forth in this reconstruction operation. In this example, the operations of projecting S140, combining S150, and outputting S 160, are performed such that the distinction between the different types of material is maintained in the combined projection image 180. For example, in the operation S140, the volumetric background image data for each type of material present in the background media 130, may be projected separately, each from the same perspective, P, with respect to the vascular region, to provide a projected background image for each type of material present in the background media 130. The combining operation S150 may include overlaying the projected background images for each type of material present in the background media 130, such that the distinction between the different types of material is maintained in the combined projection image 180. By maintaining the distinction between the different types of material in the combined projection image 180, this example further assists interventional cardiologists in diagnosing vascular regions by providing a distinction between the different materials in the background media. This enables the interventional cardiologist to benefit from the advantages of material identification that are available when using spectral CT data, and consequently to provide a more accurate diagnosis of the vascular region. In another example, the reconstruction operation S130 is performed at two different levels of image resolution. In this example, the reconstructing operation S130 comprises:

reconstructing the volumetric contrast agent image data and the volumetric background image data to provide an initial volumetric contrast agent image and an initial volumetric background image, respectively, wherein the initial volumetric contrast agent image and the initial volumetric background image each comprise first image resolution; identifying the proper subset $120_1$ of the vessels in each of the initial volumetric contrast agent image and the initial volumetric background image; and

reconstructing the volumetric contrast agent image data and the volumetric background image data selectively within a region of interest encompassing the identified proper subset $120_1$ of the vessels to provide a subsequent volumetric contrast agent image and a subsequent volumetric background image, respectively, wherein the subsequent volumetric contrast agent image and the subsequent volumetric background image each comprise a second image resolution, and wherein the second image resolution is relatively higher than the first image resolution; combining the initial volumetric contrast agent image and the subsequent volumetric contrast agent image to provide the volumetric contrast agent image; and

combining the initial volumetric background image and the subsequent volumetric background image to provide the volumetric background image.

Thus, in this example, an initial reconstruction operation is performed at a first image resolution, and then a subsequent reconstruction operation is performed within a region of interest encompassing the identified proper subset $120_1$ of the vessels. The subset of the vessels may be identified using the techniques described above. The subsequent reconstruction operation is performed at a relatively higher image resolution than the first reconstruction operation. The result is to provide a volumetric contrast agent image, and a volumetric background image, which have a relatively higher image resolution in the region of interest encompassing the proper subset $120_1$ of the vessels than outside the region of interest. When these volumetric images are projected in the operation S 140, the resulting projected images, and consequently the combined projection image that is outputted, also have a relatively higher image resolution in the region of interest encompassing the proper subset $120_1$ of the vessels. By providing a relatively higher image resolution in the region of interest encompassing the proper subset $120_1$ of the vessels than outside the region of interest, this example facilitates a rapid reconstruction of regions details outside of the proper subset $120_1$ of the vessels, and also enables a physician to provide a more accurate diagnosis of the proper subset $120_1$ of the vessels.

In a related example, other regions of interest may be defined similarly in each of the initial volumetric contrast agent image and the initial volumetric background image. These regions of interest may correspond materials such as plaque, for example. These regions of interest may be reconstructed at a relatively higher image resolution than both the subsequent volumetric contrast agent image and the subsequent volumetric background image, and consequently provide an even higher level of detail in regions of interest such as plaque.

In another example, the method includes segmenting at least one anatomical structure in the volumetric background image 150, and the projecting S 140, the combining S150, and the outputting S160, are performed such that the segmentation of the at least one anatomical structure is maintained in the combined projection image 180.

This example further assists interventional cardiologists in diagnosing vascular regions by providing the delineation of the anatomical structures in the combined projection image 180.

In this example, anatomical structures such as chambers of the heart, plaque, and so forth may be segmented. Various segmentation algorithms may be used for this purpose, such as model-based segmentation, watershed-based segmentation, region growing, level sets, graphcuts, and neural networks, for example. The segmentation of the at least one anatomical structure can be maintained in the combined projection image 180 by providing the delineation of the anatomical structures in the volumetric background image 150. Alternatively, a separate volumetric image that includes only the delineation of these structures may be generated, and this volumetric image may be projected from the same perspective, P, as the volumetric background image 150, to provide a separate image representing the projected delineation of the anatomical structures, and this image combined, e.g. as an overlay image, with the projected contrast agent image 160 and the projected background image 170 , in the operation S150, to provide the combined projection image 180.

In another example, the method includes generating a measurement of at least one vessel in the volumetric contrast agent image 140, and outputting an indication of the value of the at least one measurement. The measurement may be a measurement such as a width of a vessel, a width of a stenosis in a vessel, a length of a vessel, a measurement of a lesion size in a vessel, a measurement of an amount of plaque, for instance. The measurement may represent a boundary condition for use in simulating a pressure wire pullback curve, for example. Such measurements may be obtained using image processing techniques.

In a related example, the method includes:

simulating blood flow in the at least one vessel based on the value of the at least one measurement;

calculating a value of a blood flow parameter based on the simulated blood flow; and

outputting an indication of the value of the blood flow parameter.

This example further assists interventional cardiologists in diagnosing the vascular region by providing the value of the blood flow parameter.

In this example, the values of blood flow parameters such as the Fractional Flow Reserve "FFR", the instantaneous wave-free ratio "IFR", and so forth, may be calculated. A calculation of the FFR value may be made using geometric measurements of the vessel that are obtained from the combined projection image 180. The FFR is defined by the Equation:

$$FFR = P_d/P_a \hspace{4cm} \text{Equation 1}$$

wherein $P_d$ represents a distal pressure at a distal position in a vessel and $P_a$ represents a proximal pressure at a proximal position in a vessel. The simulation of the blood flow may be performed using a haemodynamic model to calculate the pressure values $P_d$ and $P_a$ using the geometric measurements of the vessel. When measured for a stenosis, the distal position may be distal to the stenosis. An example of a haemodynamic model that may be used in this example is disclosed in a document by Nickisch et al., "Learning Patient-Specific Lumped Models for Interactive Coronary Blood Flow Simulations", MICCAI, 2015. A lumped model may alternatively be used to calculate an FFR value, as described in the document WO 2016/001017 A1.

A value for the IFR may be calculated using the same Equation as the FFR. The IFR differs from that FFR in that the FFR is measured during the wave-free period during diastole. This wave-free period may be determined for a vasculature based on a received electrocardiogram signal, for example.

In another example, the method includes:

segmenting the volumetric contrast agent image 140 to identify myocardial tissue;

analyzing image intensities in the myocardial tissue to determine an amount of contrast agent in the myocardial tissue; and

outputting an indication of the amount of contrast agent in the myocardial tissue.

The amount of contrast agent in the myocardial tissue is a useful parameter in diagnosing the vascular region for vascular diseases such as CAD. The amount of contrast agent in the myocardial tissue is also a useful as a boundary condition in simulating blood flow. Thus, the amount of contrast agent in the myocardial tissue may be used to calculate the value of blood flow parameters such as the FFR, and the IFR.

In another example, the method includes:

receiving fluoroscopic image data representing a live sequence of images of the vascular region; and

registering the combined projection image 180 with the images in the live sequence; and

wherein the outputting S160 the combined projection image 180 comprises outputting the combined projection image registered to the images in the live sequence.

The fluoroscopic image data that is received in this example may be generated by a projection X-ray imaging system, or by a CT imaging system. Fluoroscopic images are often acquired during treatment procedures in order to perform tasks such as navigating interventional devices to a treatment site, and so forth. Fluoroscopic images indicate radiopaque materials such as interventional devices, and also dense portions of the anatomy such as bone. However, the vasculature, and soft tissue, are poorly represented in fluoroscopic images. Consequently, in order to visualize the vasculature during procedures such as interventional device navigation, a contrast agent is typically intermittently injected into the vasculature. The use of contrast agent is however desirably minimized in view of potential heath risks. By registering the combined projection image 180 with the images in the live sequence, this example facilitates the real-time navigation of interventional devices to the treatment site with reduced use of contrast agent. The registration of the combined projection image 180 with the images in the live sequence may also be used in other tasks such as in treatment planning.

In another example, the method includes performing an analysis of the combined projection image 180 to detect the presence of vascular disease. The analysis that is performed in this operation may be performed using a trained neural network, for example. The vascular disease that is diagnosed in this example may be definite ischemia diagnosis "DID", or another type of vascular disease. One example of a neural network that may be used to diagnose vascular disease is disclosed in a document by Danilov, V., et al., "Real-time coronary artery stenosis detection based on modern neural networks", Sci Rep 11, 7582 (2021). https://doi.org/10.1038/s41598-021-87174-2.

In another example, a computer program product is provided. The computer program product comprises instructions which when executed by one or more processors, cause the one or more processors to carry out a method of providing a projection image representing a vascular region. The method comprises:

receiving S110 spectral CT data 110 representing a distribution of a contrast agent in the vascular region, the vascular region comprising a plurality of vessels $120_{1..i}$ and background media 130;
analyzing S120 the spectral CT data 110 to provide i) volumetric contrast agent image data representing the distribution of the contrast agent, and ii) volumetric background image data representing the background media;
reconstructing S130 the volumetric contrast agent image data, and the volumetric background image data to provide a volumetric contrast agent image 140, and a volumetric background image 150, respectively;
projecting S140 a proper subset $120_1$ of the vessels in the volumetric contrast agent image 140, and the background media 130 in the volumetric background image 150, from a same perspective, P, with respect to the vascular region, to provide a projected contrast agent image 160 representing the proper subset $120_1$ of the vessels, and a projected background image 170 representing the background media 130, respectively;
combining S150 the projected contrast agent image 160 and the projected background image 170 to provide a combined projection image 180 representing the vascular region; and
outputting S160 the combined projection image 180.

In another example, a system 200 for providing a projection image representing a vascular region, is provided. The system comprises one or more processors 210 configured to:

receive S110 spectral CT data 110 representing a distribution of a contrast agent in the vascular region, the vascular region comprising a plurality of vessels $120_{1..i}$ and background media 130;
analyze S120 the spectral CT data 110 to provide i) volumetric contrast agent image data representing the distribution of the contrast agent, and ii) volumetric background image data representing the background media;
reconstruct S130 the volumetric contrast agent image data, and the volumetric background image data to provide a volumetric contrast agent image 140, and a volumetric background image 150, respectively;
project S140 a proper subset $120_1$ of the vessels in the volumetric contrast agent image 140, and the background media 130 in the volumetric background image 150, from a same perspective, P, with respect to the vascular region, to provide a projected contrast agent image 160 representing the proper subset $120_1$ of the vessels, and a projected background image 170 representing the background media 130, respectively;
combine S150 the projected contrast agent image 160 and the projected background image 170 to provide a combined projection image 180 representing the vascular region; and
output S160 the combined projection image 180.

An example of the system 200 is illustrated in Fig. 2. It is noted that the system 200 may also include one or more of: a spectral X-ray projection imaging system, or a spectral CT imaging system 220 as illustrated in Fig. 2, for generating the spectral CT data 110 that is received in the operation S110; an injector 230 for injecting a contrast agent into the vasculature of a subject; a monitor 240 for displaying the combined projection image 180, the fluoroscopic images, the measurements, the indications, and other outputs generated by the one or more processors 210; a patient bed 250; and a user input device (not illustrated in Fig. 2) configured to receive user input, such as a keyboard, a mouse, a touchscreen, and so forth.
The above examples are to be understood as illustrative of the present disclosure, and not restrictive. Further examples are also contemplated. For instance, the examples described in relation to a computer-implemented method, may also be provided by the computer program product, or by the computer-readable storage medium, or by the system 200, in a corresponding manner. It is to be understood that a feature described in relation to any one example may be used alone, or in combination with other described features, and may be used in combination with one or more features of another of the examples, or a combination of other examples. Furthermore, equivalents and modifications not described above may also be employed without departing from the scope of the invention, which is defined in the accompanying claims. In the claims, the word "comprising" does not exclude other elements or operations, and the indefinite article "a" or "an" does not exclude a plurality. The mere fact that certain features are recited in mutually different dependent claims does not indicate that a combination of these features cannot be used to advantage. Any reference signs in the claims should not be construed as limiting their scope.

## Claims

1.   A computer-implemented method of providing a projection image representing a vascular region, the method comprising:

receiving (S110) spectral CT data (110) representing a distribution of a contrast agent in the vascular region, the vascular region comprising a plurality of vessels ($120_{1..i}$) and background media (130); analyzing (S120) the spectral CT data 110 to provide i) volumetric contrast agent image data representing the distribution of the contrast agent, and ii) volumetric background image data representing the background media; reconstructing (S130) the volumetric contrast agent image data, and the volumetric background image data to provide a volumetric contrast agent image (140), and a volumetric background image (150), respectively; projecting (S140) a proper subset ($120_1$) of the vessels in the volumetric contrast agent image (140), and the background media (130) in the volumetric background image (150), from a same perspective (P) with respect to the vascular region, to provide a projected contrast agent image (160) representing the proper subset ($120_1$) of the vessels, and a projected background image (170) representing the background media (130), respectively; combining (S150) the projected contrast agent image (160) and the projected background image (170) to provide a combined projection image (180) representing the vascular region; and outputting (S160) the combined projection image (180).

2. The computer-implemented method according to claim 1, wherein the analyzing (S120) the spectral CT data (110) comprises applying one or more material decomposition algorithms to the spectral CT data.

3. The computer-implemented method according to any previous claim, wherein the background media (130) comprises a plurality of different types of materials;

   wherein the analyzing (S120) the spectral CT data (110) comprises analyzing the spectral CT data to provide volumetric background image data for each type of material present in the background media; wherein the reconstructing the volumetric background image data comprises reconstructing the volumetric background image data for each type of material to provide a volumetric background image wherein the different types of materials are distinguished from each other; and wherein the projecting (S140), the combining (S150), and the outputting (S160), are performed such that the distinction between the different types of material is maintained in the combined projection image (180).

4. The computer-implemented method according to any previous claim, wherein the reconstructing (S130) comprises:

   reconstructing the volumetric contrast agent image data and the volumetric background image data to provide an initial volumetric contrast agent image and an initial volumetric background image, respectively, wherein the initial volumetric contrast agent image and the initial volumetric background image each comprise first image resolution; identifying the proper subset ($120_1$) of the vessels in each of the initial volumetric contrast agent image and the initial volumetric background image; and reconstructing the volumetric contrast agent image data and the volumetric background image data selectively within a region of interest encompassing the identified proper subset ($120_1$) of the vessels to provide a subsequent volumetric contrast agent image and a subsequent volumetric background image, respectively, wherein the subsequent volumetric contrast agent image and the subsequent volumetric background image each comprise a second image resolution, and wherein the second image resolution is relatively higher than the first image resolution; combining the initial volumetric contrast agent image and the subsequent volumetric contrast agent image to provide the volumetric contrast agent image; and combining the initial volumetric background image and the subsequent volumetric background image to provide the volumetric background image.

5. The computer-implemented method according to any previous claim, further comprising identifying the proper subset ($120_1$) of the vessels in the volumetric contrast agent image (140).

6. The computer-implemented method according to any previous claim, wherein the method further comprises segmenting at least one anatomical structure in the volumetric background image (150), and wherein the projecting (S140), the combining (S150), and the outputting (S160), are performed such that the segmentation of the at least one anatomical structure is maintained in the combined projection image (180).

7. The computer-implemented method according to any previous claim, wherein the method further comprises:

   generating a measurement of at least one vessel in the volumetric contrast agent image (140); and

outputting an indication of the value of the at least one measurement.

8. The computer-implemented method according to claim 7, wherein the method further comprises:

simulating blood flow in the at least one vessel based on the value of the at least one measurement;
calculating a value of a blood flow parameter based on the simulated blood flow; and
outputting an indication of the value of the blood flow parameter.

9. The computer-implemented method according to any previous claim, wherein the method further comprises:

segmenting the volumetric contrast agent image (140) to identify myocardial tissue;
analyzing image intensities in the myocardial tissue to determine an amount of contrast agent in the myocardial tissue; and
outputting an indication of the amount of contrast agent in the myocardial tissue.

10. The computer-implemented method according to any previous claim, wherein the method further comprises:

receiving fluoroscopic image data representing a live sequence of images of the vascular region; and
registering the combined projection image (180) with the images in the live sequence; and
wherein the outputting (S160) the combined projection image (180) comprises outputting the combined projection image registered to the images in the live sequence.

11. The computer-implemented method according to any previous claim, wherein the method further comprises performing an analysis of the combined projection image (180) to detect the presence of vascular disease.

12. The computer-implemented method according to any previous claim, wherein the proper subset $(120_1)$ of the vessels comprises at least one coronary artery.

13. The computer-implemented method according to any previous claim, wherein the combining (S150) the projected contrast agent image (160) and the projected background image (170) comprises overlaying the projected contrast agent image and the projected background image to provide the combined projection image (180) representing the vascular region.

14. A computer program product comprising instructions which when executed by one or more processors, cause the one or more processors to carry out the method according to any one of claims 1- 13.

15. A system (200) for providing a projection image representing a vascular region, the system comprising one or more processors (210) configured to:

receive (S110) spectral CT data (110) representing a distribution of a contrast agent in the vascular region, the vascular region comprising a plurality of vessels $(120_{1..i})$ and background media (130);
analyze (S120) the spectral CT data (110) to provide i) volumetric contrast agent image data representing the distribution of the contrast agent, and ii) volumetric background image data representing the background media;
reconstruct (S130) the volumetric contrast agent image data, and the volumetric background image data to provide a volumetric contrast agent image (140), and a volumetric background image (150), respectively;
project (S140) a proper subset $(120_1)$ of the vessels in the volumetric contrast agent image (140), and the background media (130) in the volumetric background image (150), from a same perspective (P) with respect to the vascular region, to provide a projected contrast agent image (160) representing the proper subset $(120_1)$ of the vessels, and a projected background image (170) representing the background media (130), respectively;
combine (S150) the projected contrast agent image (160) and the projected background image (170) to provide a combined projection image (180) representing the vascular region; and
output (S160) the combined projection image (180).

S110

S120

S130

S140

S150

S160

# FIG. 1

200

220

240

230

250

110

210

# FIG. 2

FIG. 3

Europäisches
Patentamt

European
Patent Office

Office européen
des brevets

# EUROPEAN SEARCH REPORT

**Application Number**

EP 23 20 2936

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/072752 A1 (KONINKLIJKE PHILIPS NV [NL]) 4 May 2023 (2023-05-04) <br> * abstract * <br> * page 7, paragraph 2 * <br> * page 9, line 33 – page 19, line 2 * | 1-15 | INV. <br> G06T11/00 |
| X | WO 2008/047270 A1 (KONINKL PHILIPS ELECTRONICS NV [NL] ET AL.) 24 April 2008 (2008-04-24) <br> * abstract * <br> * figures 3a-3d * <br> * page 4, line 1 – page 10, line 29 * <br> * page 12, line 5 – page 16, line 30 * | 1,13-15 | |
| A | US 2016/371862 A1 (SILVER MICHAEL D [US] ET AL) 22 December 2016 (2016-12-22) <br> * the whole document * | 1-15 | |
| A | EP 4 162 879 A1 (KONINKLIJKE PHILIPS NV [NL]) 12 April 2023 (2023-04-12) <br> * the whole document * | 1-15 | |
| | | | TECHNICAL FIELDS SEARCHED (IPC) |
| A | EP 4 197 429 A1 (KONINKLIJKE PHILIPS NV [NL]) 21 June 2023 (2023-06-21) <br> * the whole document * | 1-15 | G06T |
| A | WO 2012/123896 A2 (KONINKL PHILIPS ELECTRONICS NV [NL]; HANSIS EBERHARD SEBASTIAN [US]) 20 September 2012 (2012-09-20) <br> * the whole document * | 1-15 | |

The present search report has been drawn up for all claims

| Place of search | Date of completion of the search | Examiner |
|---|---|---|
| Munich | 24 April 2024 | Leclercq, Philippe |

EPO FORM 1503 03.82 (P04C01)

## ANNEX TO THE EUROPEAN SEARCH REPORT
## ON EUROPEAN PATENT APPLICATION NO.

EP 23 20 2936

This annex lists the patent family members relating to the patent documents cited in the above-mentioned European search report.
The members are as contained in the European Patent Office EDP file on
The European Patent Office is in no way liable for these particulars which are merely given for the purpose of information.

24-04-2024

| Patent document cited in search report | | | Publication date | Patent family member(s) | | | Publication date |
|---|---|---|---|---|---|---|---|
| WO 2023072752 | A1 | | 04-05-2023 | NONE | | | |
| WO 2008047270 | A1 | | 24-04-2008 | CN | 101529475 | A | 09-09-2009 |
| | | | | EP | 2074595 | A1 | 01-07-2009 |
| | | | | RU | 2009118382 | A | 27-11-2010 |
| | | | | US | 2010296623 | A1 | 25-11-2010 |
| | | | | WO | 2008047270 | A1 | 24-04-2008 |
| US 2016371862 | A1 | | 22-12-2016 | JP | 6747885 | B2 | 26-08-2020 |
| | | | | JP | 2017006679 | A | 12-01-2017 |
| | | | | US | 2016371862 | A1 | 22-12-2016 |
| EP 4162879 | A1 | | 12-04-2023 | EP | 4162879 | A1 | 12-04-2023 |
| | | | | WO | 2023057189 | A1 | 13-04-2023 |
| EP 4197429 | A1 | | 21-06-2023 | EP | 4197429 | A1 | 21-06-2023 |
| | | | | WO | 2023110415 | A1 | 22-06-2023 |
| WO 2012123896 | A2 | | 20-09-2012 | CN | 103458790 | A | 18-12-2013 |
| | | | | EP | 2685899 | A2 | 22-01-2014 |
| | | | | JP | 5872593 | B2 | 01-03-2016 |
| | | | | JP | 2014517713 | A | 24-07-2014 |
| | | | | RU | 2013146328 | A | 27-04-2015 |
| | | | | US | 2014003688 | A1 | 02-01-2014 |
| | | | | WO | 2012123896 | A2 | 20-09-2012 |

EPO FORM P0459

For more details about this annex : see Official Journal of the European Patent Office, No. 12/82

## REFERENCES CITED IN THE DESCRIPTION

**Patent documents cited in the description**

- WO 2007034359 A2

- WO 2016001017 A1

**Non-patent literature cited in the description**

- **BRENDEL, B. et al.** Empirical, projection-based basis-component decomposition method. *Medical Imaging 2009, Physics of Medical Imaging, edited by Ehsan Samei and Jiang Hsieh, Proc. of SPIE*, vol. 7258, 72583Y
- **ROESSL, E. ; PROKSA, R.** K-edge imaging in X-ray computed tomography using multi-bin photon counting detectors. *Phys Med Biol.*, 07 August 2007, vol. 52 (15), 4679-96
- **SILVA, A. C. et al.** Dual-energy (spectral) CT: applications in abdominal imaging. *RadioGraphics*, 2011, vol. 31 (4), 1031-1046

- U-Net: Convolutional Networks for Biomedical Image Segmentation. **RONNEBERGER, O. et al.** Medical Image Computing and Computer-Assisted Intervention - MICCAI 2015. MICCAI 2015. Lecture Notes in Computer Science, vol. 9351
- **WOLTERINK, J.** Coronary Artery Centerline Extraction in Cardiac CT Angiography Using a CNN-Based Orientation Classifier. *Medical Image Analysis*, January 2019, vol. 51, 46-60
- **NICKISCH et al.** Learning Patient-Specific Lumped Models for Interactive Coronary Blood Flow Simulations. *MICCAI*, 2015
- **DANILOV, V. et al.** Real-time coronary artery stenosis detection based on modern neural networks. *Sci Rep*, 2021, vol. 11, 7582, https://doi.org/10.1038/s41598-021-87174-2